# FASCICULE DE BREVET EUROPEEN

(11) **EP 3 176 655 B1**
(45) Date de publication et mention de la délivrance du brevet: **09.09.2020**
(21) Numéro de dépôt: 16201546.5
(22) Date de dépôt: 30.11.2016
(51) Int. Cl.: G05B 11/42, G05B 13/02, B64C 13/50

(54) **SYSTEME D'ACTIONNEMENT POUR AERONEF**
BETÄTIGUNGSSYSTEM FÜR LUFTFAHRZEUG
ACTUATING SYSTEM FOR AN AIRCRAFT

(30) Priorité: 01.12.2015 FR 1561679
(43) Date de publication de la demande: 07.06.2017
(73) Titulaire: Safran Landing Systems, 78140 Vélizy-Villacoublay (FR); Safran Helicopter Engines, 64510 Bordes (FR)
(72) Inventeur: MOUTAUX, Antoine, 77550 Moissy-Cramayel (FR); NIERLICH, Florent, 78140 Velizy-Villacoublay (FR)
(74) Mandataire: Lavaud, Thomas

(56) Documents cités:
- EP-A2- 2 942 679
- WO-A1-98/50711
- US-A- 5 248 922
- US-A1- 2004 135 534
- US-A1- 2005 093 501
- US-A1- 2012 239 244

## Description

L'invention concerne le domaine des systèmes d'actionnement électrique embarqués dans les aéronefs.

### ARRIERE PLAN DE L'INVENTION

Dans les aéronefs, de nombreux systèmes embarqués intègrent des pièces mobiles qu'il convient de mettre en mouvement.

Parmi ces pièces mobiles, on trouve notamment des éléments de voilure (par exemple un aileron, un volet, un aérofrein), des éléments du train d'atterrissage (par exemple une jambe d'atterrisseur mobile entre une position étendue et une position rétractée, ou bien un poussoir d'un frein d'une roue qui coulisse en regard d'organes de friction du frein), des éléments permettant de mettre en œuvre des turbines à géométries variables, des éléments d'une pompe ou d'un mécanisme de dosage de carburant, des éléments des inverseurs de poussée, des éléments d'un mécanisme de pilotage du pas d'une hélice (par exemple sur hélicoptère ou turbopropulseur), etc.

Dans les aéronefs modernes, on utilise de plus en plus d'actionneurs électromécaniques pour mettre en mouvement ces pièces mobiles. Les avantages de l'utilisation d'actionneurs électromécaniques sont en effet nombreux : simplicité de la distribution électrique et du pilotage, flexibilité, simplification des opérations de maintenance, etc.

Un actionneur électromécanique comporte classiquement un organe d'actionnement mobile qui déplace la pièce mobile, un moteur électrique destiné à entraîner l'organe d'actionnement mobile et donc la pièce mobile, et un ou plusieurs capteurs de paramètres divers de l'actionneur électromécanique.

Un système embarqué d'actionnement électrique dans lequel est intégré un tel actionneur électromécanique met classiquement en œuvre les fonctions suivantes : élaboration d'une consigne selon la fonction à réaliser (par exemple, une consigne en vitesse ou en position ou en force), mesure d'un paramètre d'asservissement de l'actionneur électromécanique (par exemple, la vitesse, la position, la force), exécution d'une boucle d'asservissement permettant à l'actionneur électromécanique d'atteindre la consigne, génération d'un courant électrique d'alimentation du moteur électrique, et transformation par le moteur électrique de l'énergie électrique en une énergie mécanique qui entraîne l'organe d'actionnement et donc la pièce mobile.

Généralement, les fonctions d'exécution de la boucle d'asservissement et de génération du courant électrique d'alimentation sont mises en œuvre dans un ou plusieurs calculateurs centralisés : on parle alors d'une architecture centralisée.

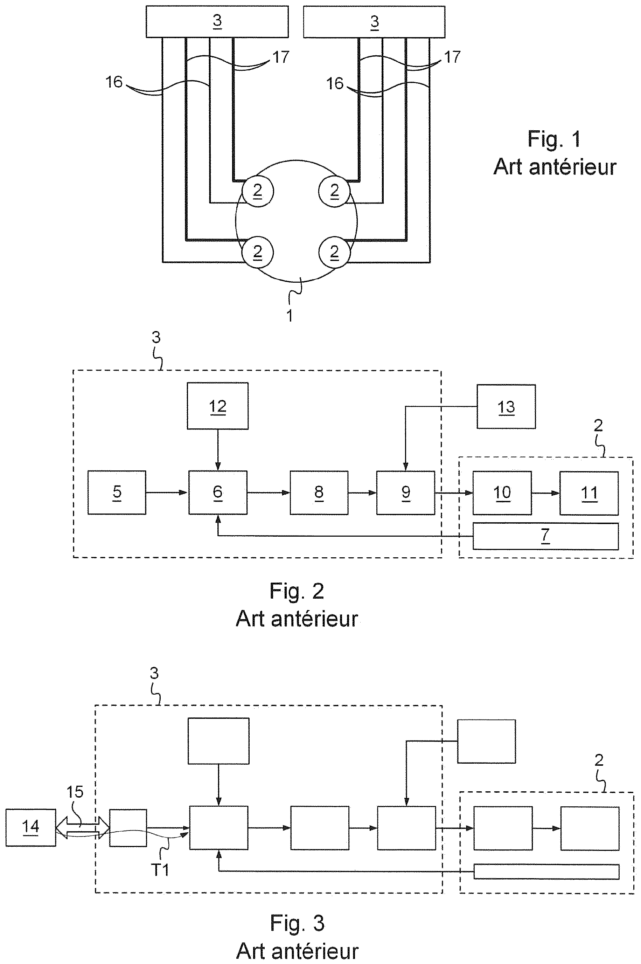

Ainsi, en référence à la figure 1, un frein d'aéronef connu 1 comporte quatre actionneurs électromécaniques de freinage 2 qui sont regroupés en deux groupes distincts de deux actionneurs électromécaniques 2. Les actionneurs électromécaniques 2 d'un groupe distinct sont connectés à un même calculateur centralisé 3 situé dans la soute de l'aéronef. Le moteur électrique de chaque actionneur électromécanique 2 reçoit un courant électrique d'alimentation du calculateur centralisé 3 auquel l'actionneur électromécanique 2 est connecté, et chaque actionneur électromécanique 2 transmet des mesures d'un paramètre d'asservissement au calculateur centralisé 3 (par exemple des mesures de position angulaire du rotor du moteur électrique).

Il existe au moins deux configurations différentes d'une telle architecture centralisée qui se différencient par la localisation de l'élaboration de la consigne.

Dans une première configuration, visible sur la figure 2, des moyens de génération de consigne 5 de chaque calculateur centralisé 3 élaborent la consigne et la transmettent à des moyens de traitement 6 du calculateur centralisé 3. Les moyens de traitement 6 du calculateur centralisé 3 exécutent alors une boucle d'asservissement. L'actionneur électromécanique 2 transmet les mesures du paramètre d'asservissement réalisées par un capteur 7 au calculateur centralisé 3, lesdites mesures constituant le signal de retour de la boucle d'asservissement. Le signal de sortie de la boucle d'asservissement est transmis à un pilote de module de puissance 8 puis à un module de puissance 9 du calculateur centralisé 3 qui génère le courant électrique d'alimentation du moteur électrique 10 de l'actionneur électromécanique 2. Le moteur électrique 10 entraîne alors l'organe d'actionnement 11. La mise en œuvre de la boucle d'asservissement nécessite des paramètres stockés dans une mémoire 12 du calculateur centralisé 3. Le module de puissance 9 du calculateur centralisé 3 est alimenté par une unité d'alimentation 13 externe au calculateur centralisé 3.

Dans une deuxième configuration, visible sur la figure 3, le calculateur centralisé 3 est cette fois dédié à l'asservissement de l'actionneur électromécanique 2 et à la génération du courant électrique d'alimentation, et il n'élabore plus la consigne, qui lui est fournie par un autre équipement 14 via un bus numérique 15 par exemple (transmission symbolisée par la référence T1 sur la figure 3).

On note que ces deux configurations d'architecture présentent un certain nombre d'inconvénients. Il est notamment nécessaire de dimensionner le calculateur centralisé 3 en fonction de la technologie de l'actionneur électromécanique 2 utilisé et d'adapter les paramètres de la boucle d'asservissement au dimensionnement de l'actionneur électromécanique 2 utilisé. On tend ainsi à appairer le calculateur centralisé 3 et l'actionneur électromécanique 2, ce qui rend très compliqués et très onéreux un changement de technologie de l'actionneur électromécanique 2 et une modification du paramétrage de la boucle d'asservissement résultant du changement de technologie.

De plus, les fils électriques entre le calculateur centralisé 3 et l'actionneur électromécanique 2 véhiculent des courants élevés et variables qui nécessitent des précautions complexes à mettre en œuvre pour maîtriser les émissions électromagnétiques.

Les références suivantes représentent l'état de la technique pertinent pour la présente invention.

Les documents WO 98/50711 A1 et US 2012/0239244 concernent la commande à distance et la surveillance des actionneurs dans un avion. US 2012/0239244 décrit en particulier l'utilisation d'un module de mémoire dans les actionneurs pour minimiser l'espace mémoire dans une unité centrale de traitement (CPU).

### OBJET DE L'INVENTION

L'invention a pour objet de réduire la complexité et le coût d'un système d'actionnement électrique.

### RESUME DE L'INVENTION

En vue de la réalisation de ce but, on propose un système d'actionnement pour aéronef comprenant :
- un actionneur électromécanique qui intègre un moteur électrique, un module de puissance destiné à générer un courant d'alimentation du moteur électrique, des moyens de mesure adaptés à mesurer une grandeur d'asservissement de l'actionneur électromécanique et à générer un signal numérique de mesure représentatif de la grandeur d'asservissement, un module de communication et une mémoire non volatile dans laquelle sont stockées des données mémorisées comportant des données de configuration propres à l'actionneur électromécanique ;
- une unité de commande séparée de l'actionneur électromécanique et destinée à exécuter un algorithme d'asservissement en acquérant et en utilisant les données de configurations pour adapter l'algorithme d'asservissement à l'actionneur électromécanique, l'algorithme d'asservissement mettant en œuvre une boucle d'asservissement ayant pour signal de retour le signal numérique de mesure et pour signal de sortie un signal numérique de commande du moteur électrique à destination du module de puissance ;
- au moins un canal de transmission numérique reliant l'unité de commande et l'actionneur électromécanique et permettant le cheminement entre l'unité de commande et l'actionneur électromécanique du signal numérique de mesure, des données mémorisées et du signal numérique de commande.

L'utilisation de la mémoire non volatile située dans l'actionneur électromécanique et comprenant des données de configuration propres à l'actionneur électromécanique permet de mutualiser l'unité de commande en utilisant celle-ci dans différents systèmes d'actionnement électrique intégrant des actionneurs électromécaniques différents. On réduit ainsi le coût de ces systèmes d'actionnement électrique, mais aussi la complexité du développement desdits systèmes, puisqu'il n'est plus nécessaire de développer entièrement une unité de commande pour chacun desdits systèmes. De plus, la conception de l'unité de commande ne nécessite plus de connaître les données de configuration propres à l'actionneur électromécanique utilisé (voire même, ne nécessite plus de connaitre la technologie spécifique de l'actionneur électromécanique utilisé). On réduit donc les interactions nécessaires entre les activités de développement de l'unité de commande et de l'actionneur électromécanique, et donc on réduit à nouveau la complexité de ces développements et donc le coût des systèmes d'actionnement électrique.

D'autres caractéristiques et avantages de l'invention ressortiront à la lecture de la description qui suit de modes de réalisation particuliers, non limitatifs de l'invention.

### BREVE DESCRIPTION DES DESSINS

Il sera fait référence aux dessins annexés parmi lesquels :
- la figure 1 représente une architecture de système de freinage de l'art antérieur ;
- la figure 2 représente un premier système d'actionnement de l'art antérieur ;
- la figure 3 représente un deuxième système d'actionnement de l'art antérieur ;
- la figure 4 représente une architecture de système de freinage selon un premier mode de réalisation ;
- la figure 5 représente une architecture de système de freinage selon un deuxième mode de réalisation ;
- la figure 6 représente un système d'actionnement selon un premier mode de réalisation de l'invention ;
- la figure 7 représente un système d'actionnement selon un deuxième mode de réalisation de l'invention ;
- la figure 8 représente un système d'actionnement selon un troisième mode de réalisation de l'invention ;
- la figure 9 représente un système d'actionnement selon un quatrième mode de réalisation de l'invention.

### DESCRIPTION DETAILLEE DE L'INVENTION

L'invention est ici mise en œuvre sur un aéronef qui comporte une pluralité d'atterrisseurs principaux portant chacun une pluralité de roues dites « freinées », c'est à dire une pluralité de roues équipées d'un frein pour freiner l'aéronef. La présente description porte sur une unique roue freinée, mais l'invention s'applique bien sûr de la même manière à tout ou partie des roues freinées de l'aéronef ou à tout autre dispositif d'un aéronef ou de sa motorisation mettant en œuvre un actionneur électromécanique.

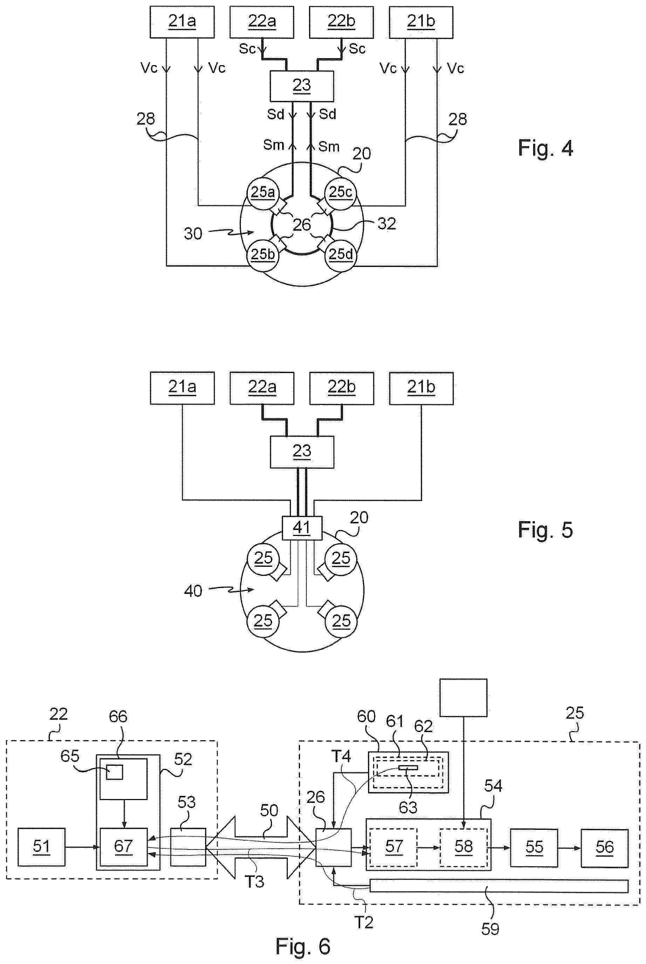

En référence à la figure 4, une architecture de système de freinage selon un premier mode de réalisation comporte donc un frein 20 destiné à freiner une roue de l'aéronef, une première unité d'alimentation 21a, une deuxième unité d'alimentation 21b, une première unité de commande 22a, une deuxième unité de commande 22b et un commutateur réseau 23.

Le frein 20 comporte un porte-actionneurs sur lequel sont montés quatre actionneurs électromécaniques de freinage 25a, 25b, 25c, 25d et des organes de friction, en l'occurrence une pile de disques de carbone.

Les quatre actionneurs électromécaniques 25 sont utilisés pour appliquer un effort de freinage sur la pile de disques de carbone et exercer ainsi un couple de freinage sur la roue qui ralentit la rotation de la roue et donc freine l'aéronef lorsque celui-ci est au sol.

Chaque actionneur électromécanique 25 comporte un corps fixé au porte-actionneurs, un poussoir et un organe de blocage adapté à bloquer en position le poussoir. Un moteur électrique, un module de puissance et un module de communication numérique 26 sont intégrés à l'intérieur du corps de chaque actionneur électromécanique 25.

Le poussoir est actionné par le moteur électrique pour coulisser et appliquer l'effort de freinage sur la pile de disques de carbone.

Le module de puissance permet de générer un courant d'alimentation alternatif qui circule dans trois phases du moteur électrique lorsqu'il convient d'actionner le poussoir et donc de freiner la roue. Le module de puissance comporte à cet effet un onduleur comprenant une pluralité d'interrupteurs qui sont commandés de manière à transformer une tension d'alimentation continue Vc en une tension alternative sous laquelle est généré le courant d'alimentation du moteur électrique.

Les tensions d'alimentation Vc reçues par les modules de puissance des quatre actionneurs électromécaniques 25 du frein 20 proviennent de la première unité d'alimentation 21a et de la deuxième unité d'alimentation 21b.

Les quatre actionneurs électromécaniques 25 sont regroupés en un premier groupe et un deuxième groupe distincts, le premier groupe comprenant les actionneurs électromécaniques 25a et 25b et le deuxième groupe comprenant les actionneurs électromécaniques 25c et 25d.

La première unité d'alimentation 21a fournit la tension d'alimentation Vc aux modules de puissance des actionneurs électromécaniques 25a et 25b du premier groupe, alors que la deuxième unité d'alimentation 21b fournit la tension d'alimentation aux modules de puissance des actionneurs électromécaniques 25c et 25d du deuxième groupe.

Pour recevoir la tension d'alimentation Vc, chaque actionneur électromécanique 25 est connecté par deux fils électriques d'alimentation 28 à la première unité d'alimentation 21a ou à la deuxième unité d'alimentation 21b.

La première unité d'alimentation 21a et la deuxième unité d'alimentation 21b sont positionnées en soute, dans le fuselage de l'aéronef, en haut de l'atterrisseur.

Le module de puissance de chaque actionneur électromécanique 25 utilise par ailleurs un signal numérique de commande Sc pour commander les interrupteurs de l'onduleur.

Les signaux numériques de commande Sc des quatre actionneurs électromécaniques 25 sont générés par la première unité de commande 22a et par la deuxième unité de commande 22b.

Cette fois, chaque unité de commande 22 génère des signaux numériques de commande Sc à destination des quatre actionneurs électromécaniques 25. La première unité de commande 22a et la deuxième unité de commande 22b sont donc redondées, de sorte que la perte de l'une des deux unités de commande 22 ne dégrade pas la performance du freinage.

La première unité de commande 22a et la deuxième unité de commande 22b sont positionnées en soute, dans le fuselage de l'aéronef, en haut de l'atterrisseur.

La distribution des signaux numériques de commande Sc aux modules de puissance des quatre actionneurs électromécaniques 25 est réalisée via les modules de communication numérique 26 des quatre actionneurs électromécaniques 25, chaque module de communication numérique 26 d'un actionneur électromécanique 25 transmettant au module de puissance et donc à l'onduleur du module de puissance dudit actionneur électromécanique 25 les signaux numériques de commande Sc qui lui sont destinés.

Les modules de communication numérique 26 des quatre actionneurs électromécaniques 25 sont interconnectés pour former un réseau numérique 30 (par réseau numérique, on entend donc ici un ensemble de dispositifs communicants interconnectés et échangeant des données sous forme de signaux numériques). Le réseau numérique 30 présente ici une topologie en anneau.

Le commutateur réseau 23, qui est connecté à la première unité de commande 22a et à la deuxième unité de commande 22b, est intégré dans le réseau numérique 30.

Le commutateur réseau 23 est ainsi connecté aux modules de communication numérique 26 de deux actionneurs électromécaniques du frein 25a et 25c, de manière à constituer lui aussi l'une des entités formant la boucle fermée du réseau numérique 30 en anneau, les modules de communication numérique 26 des quatre actionneurs électromécaniques 25 constituant les autres entités. Chaque entité (module de communication numérique 26 ou commutateur réseau 23) du réseau numérique 30 est reliée par quatre fils électriques de communication 32 à deux entités distinctes.

Le commutateur réseau 23 gère le fonctionnement du réseau numérique 30 en distribuant les signaux numériques de commande Sc provenant de la première unité de commande 22a et de la deuxième unité de commande 22b aux modules de communication numérique 26 via le réseau numérique 30.

Le commutateur réseau 23 est ici positionné avec la première unité de commande 22a et avec la deuxième unité de commande 22b dans un même boîtier (qui est donc positionné en soute, dans le fuselage de l'aéronef, en haut de l'atterrisseur).

Ainsi, la transmission aux modules de communication numérique 26 et donc aux modules de puissance des signaux numériques de commande Sc provenant des unités de commande 22, et l'alimentation des modules de puissance par les tensions d'alimentation Vc provenant des unités d'alimentation 21 nécessitent seize fils électriques qui cheminent depuis le haut de l'atterrisseur vers le frein 20, au lieu des vingt-huit fils électriques de l'architecture de la figure 1.

On note que le réseau numérique 30 qui vient d'être décrit n'est pas uniquement utilisé pour transmettre les signaux numériques de commande Sc aux modules de puissance des actionneurs électromécaniques 25.

Des signaux numériques montants Sm sont aussi transmis depuis le frein 20 vers les unités de commande 22 via le réseau numérique 30 et donc via le commutateur réseau 23.

Les signaux numériques montants Sm comportent tout d'abord des signaux numériques de mesure émis par les modules de communication numérique 26 et provenant de capteurs intégrés dans les actionneurs électromécaniques 25. Les signaux numériques de mesure sont ici des signaux de mesure de position angulaire des rotors des moteurs électriques, des signaux de mesure des courants d'alimentation des moteurs électriques, et des signaux de mesure d'effort produit par l'organe d'actionnement des actionneur électromécaniques 25.

Les signaux de mesure de position angulaire proviennent, pour chaque actionneur électromécanique 25, d'un capteur de position angulaire intégré dans ledit actionneur électromécanique 25.

Les signaux de mesure de courant proviennent, pour chaque actionneur électromécanique 25, d'un capteur de courant intégré dans ledit actionneur électromécanique 25.

Les signaux de mesure d'effort proviennent, pour chaque actionneur électromécanique 25, d'un capteur d'effort intégré dans ledit actionneur électromécanique 25.

Les signaux de mesure de position angulaire, de courant et d'effort sont numérisés par les modules de communication 26, émis sur le réseau numérique 30 et utilisés par les unités de commande 22 pour générer les signaux numériques de commande Sc et piloter les moteurs électriques des quatre actionneurs électromécaniques 25.

Les signaux numériques montants Sm comportent ensuite des signaux de surveillance des actionneurs électromécaniques 25 émis par les modules de communication numérique 26.

Les signaux de surveillance des actionneurs électromécaniques 25 sont destinés à fournir un état des actionneurs électromécaniques 25 à partir duquel les unités de commande 22 peuvent éventuellement prendre la décision de commander une opération de maintenance, ou bien de désactiver entièrement ou partiellement un ou plusieurs actionneurs électromécaniques 25.

Enfin, les signaux numériques montants Sm comportent des signaux de mesure transmis aux actionneurs électromécaniques par un capteur externe situé sur la roue (non représenté sur la figure 4). Le capteur externe est ici un capteur de couple de freinage situé sur le frein 20. Le capteur externe est intégré dans le réseau numérique 30 (il forme lui aussi une entité du réseau numérique en anneau). Il comprend une interface numérique qui, comme les modules de communication numérique 26 précédemment évoqués, permet au capteur externe de transmettre les mesures de couple aux unités de commande 22 via le réseau numérique 30.

Par ailleurs, outre les signaux numériques de commande Sc, des signaux numériques descendants additionnels Sd sont transmis depuis les unités de commande 22 vers le frein 20 via le réseau numérique 30.

Les signaux numériques descendants additionnels Sd comportent tout d'abord des signaux d'ordre de test fonctionnel et des signaux d'ordre de sanction des actionneurs électromécaniques 25.

Les signaux d'ordre de test fonctionnel déclenchent l'exécution de tests fonctionnels par les actionneurs électromécaniques 25 en vue d'établir des diagnostics relatifs au fonctionnement des actionneurs électromécaniques 25 (et, éventuellement, relatifs à l'efficacité des communications depuis et à destination des actionneurs électromécaniques 25).

Les signaux d'ordre de sanction permettent aux unités de commande 22 de « sanctionner » un actionneur électromécanique 25 en le désactivant entièrement ou partiellement, ou bien en excluant son module de communication numérique 26 du réseau numérique 30.

Les signaux numériques descendants additionnels Sd comportent aussi des signaux de pilotage d'un autre équipement monté sur la roue, en l'occurrence ici d'un ventilateur du frein 20 (non représenté sur la figure 4). Le ventilateur du frein 20 est intégré dans le réseau numérique 30 (il forme lui aussi une entité du réseau numérique en anneau). Il comprend une interface numérique qui, comme les modules de communication numérique 26 précédemment évoqués, permet au ventilateur du frein 20 de recevoir les signaux de pilotage provenant des unités de commande 22 via le réseau numérique 30.

Dans l'architecture de système de freinage selon un deuxième mode de réalisation, visible sur la figure 5, le réseau numérique est cette fois un réseau numérique en étoile 40.

Le commutateur réseau 23 forme un nœud du réseau numérique en étoile 40 auquel sont reliés tous les actionneurs électromécaniques 25 du frein 20.

On note que l'architecture de système de freinage selon le deuxième mode de réalisation comporte, outre les quatre actionneurs électromécaniques 25, les deux unités d'alimentation 21, les deux unités de commande 22 et le commutateur réseau 23, un boîtier de connexion 41 monté sur le porte-actionneurs du frein 20.

Les quatre actionneurs électromécaniques 25, les deux unités d'alimentation 21, les deux unités de commande 22 et le commutateur réseau 23 sont reliés au boîtier de connexion 41.

Le boîtier de connexion 41 reçoit les tensions d'alimentation continues et les signaux numériques descendants évoqués précédemment, et les distribue aux actionneurs électromécaniques 25 ainsi qu'au capteur de couple de freinage et au ventilateur de frein. Le boîtier de connexion 41 reçoit aussi les signaux numériques montants évoqués précédemment, et les distribue au commutateur réseau 23 qui les transmet aux deux unités de commande 22.

Avantageusement, et quel que soit le mode de réalisation de l'architecture de système de freinage, l'organe de blocage de chaque actionneur électromécanique 25 est lui aussi intégré au réseau numérique 30 ou 40. L'organe de blocage est alors alimenté localement à partir de la tension d'alimentation reçue par l'actionneur électromécanique 25 et provenant de l'une des unités d'alimentation 21. L'organe de blocage reçoit des ordres de pilotage via le réseau numérique 30, 40 et émet un statut sur le réseau numérique 30, 40.

On décrit désormais plus en détail la manière dont chaque unité de commande 22 commande l'un des quatre actionneurs électromécaniques 25, et donc génère les signaux numériques de commande Sc à destination de cet actionneur électromécanique 25.

En référence à la figure 6, on considère que l'une des deux unités de commande 22 et l'un des quatre actionneurs électromécaniques 25 forment un système d'actionnement selon un premier mode de réalisation de l'invention qui, outre l'unité de commande 22 et l'actionneur électromécanique 25, comporte un canal de transmission numérique 50 qui relie l'unité de commande 22 et l'actionneur électromécanique 25. Ce qui suit s'applique bien sûr aux deux unités de commande 22 et aux quatre actionneurs électromécaniques 25 décrits plus tôt.

Dans les architectures de système de freinage des figures 4 et 5, le canal de transmission numérique 50 est formé par les fils électriques qui relient l'unité de commande 22 au commutateur réseau 23, par le commutateur réseau 23, par le boîtier de connexion 41 en ce qui concerne la figure 5, et par les différents éléments du réseau numérique (fils électriques, modules de communication 26 d'autres actionneurs électromécaniques 25) qui séparent le module de communication numérique 26 de l'actionneur électromécanique 25 en question du commutateur réseau 23.

L'unité de commande 22 comporte des moyens de génération de consigne 51, des moyens de traitement 52, et une interface de communication numérique 53.

Comme on l'a vu plus tôt, l'actionneur électromécanique 25 comporte un module de communication 26, un module de puissance 54, un moteur électrique 55, un poussoir 56 et des moyens de mesure 59 comprenant des capteurs (par exemple capteur de courant, capteur de position angulaire ou linéaire, capteur d'effort ou de couple). Le module de puissance 54 comporte un pilote d'onduleur 57 et un onduleur 58.

L'actionneur électromécanique 25 comporte de plus une mémoire non volatile 60 dans laquelle sont stockées des données mémorisées 61 comportant des données de configuration 62 propres à l'actionneur électromécanique 25.

Les données de configuration 62 comportent des paramètres d'asservissement 63 propres à l'actionneur électromécanique 25 dont le rôle est expliqué ci-après.

La mémoire non volatile 60, programmée au cours de la fabrication de l'actionneur électromécanique 25, est compatible avec les conditions environnementales (température, vibrations, chocs, perturbations électromagnétiques, etc.) subies par l'actionneur électromécanique 25 qui est monté sur un porte-actionneurs du frein. La mémoire non volatile 60 est avantageusement intégrée dans un composant semi-conducteur du module de communication numérique 26.

La position angulaire mesurée par le capteur de position angulaire de l'actionneur électromécanique 25 et le courant mesuré par le capteur de courant de l'actionneur électromécanique 25 constituent des grandeurs d'asservissement de l'actionneur électromécanique 25.

Les moyens de mesure 59 convertissent les mesures des grandeurs d'asservissement en signaux numériques de mesure représentatifs des grandeurs d'asservissement.

Pour commander l'actionneur électromécanique 25, les moyens de traitement 52 de l'unité de commande 22 exécutent un algorithme d'asservissement 67 dont le code exécutable 65 est stocké dans une mémoire 66 des moyens de traitement 52.

L'algorithme d'asservissement 67 met en œuvre trois boucles d'asservissement imbriquées destinées à piloter le module de puissance 54 de l'actionneur électromécanique 25 via le canal numérique 50 : une boucle d'asservissement en courant, une boucle d'asservissement en vitesse et une boucle d'asservissement en position.

Chaque boucle d'asservissement a pour signal de consigne une consigne générée par les moyens de génération de consigne 51 de l'unité de commande 22 ou d'une autre unité de contrôle de l'aéronef.

La boucle d'asservissement en courant a pour signal de retour le signal numérique de mesure représentatif du courant, et les boucles d'asservissement en vitesse et en position ont pour signaux de retour les signaux numériques de mesure représentatifs de la position angulaire. Les signaux de retour sont transmis par le module de communication 26 de l'actionneur électromécanique 25 à l'unité de commande 22 via le canal de transmission numérique 50(transmission T2 sur la figure 6).

L'algorithme d'asservissement a pour signal de sortie un signal numérique de commande du moteur électrique 55 à destination du module de puissance 54 (transmission T3 sur la figure 6).

Les signaux numériques de commande sont transmis au module de puissance 54 de l'actionneur électromécanique 25 via l'interface numérique 53 de l'unité de commande 22, le canal de transmission numérique 50 et le module de communication numérique 26 de l'actionneur électromécanique 25 (transmission T3 sur la figure 6). Le pilote d'onduleur 57 du module de puissance 54 pilote alors l'onduleur 58 qui génère un courant d'alimentation du moteur électrique 55 pour entraîner le poussoir 56 de l'actionneur électromécanique 25 conformément à la consigne.

La mise en œuvre des boucles d'asservissement utilise les paramètres d'asservissement 63 propres à l'actionneur électromécanique 25, qui comportent ici un coefficient proportionnel, un coefficient intégral et un coefficient dérivé, et une limitation en position, une limitation en vitesse et une limitation en courant de l'actionneur électromécanique 25.

Avant l'utilisation de l'actionneur électromécanique 25, par exemple au moment de la mise sous tension de l'unité de commande 22 et de l'actionneur électromécanique 25, les moyens de traitement 52 de l'unité de commande 22 acquièrent les paramètres d'asservissement 63 stockés dans la mémoire non volatile 60 de l'actionneur électromécanique 25 et les intègrent dans les boucles d'asservissement (transmission T4 sur la figure 6). Les moyens de traitement 52 disposent alors de l'intégralité des données nécessaire pour exécuter l'algorithme d'asservissement 67 et les boucles d'asservissement.

Ainsi, tout changement dans la conception de l'actionneur électromécanique 25 nécessitant une modification des paramètres d'asservissement 63 propres à l'actionneur électromécanique 25 peut être mis en œuvre uniquement en stockant les nouveaux paramètres d'asservissement 63 dans la mémoire non volatile 60 de l'actionneur électromécanique 25, et donc sans modifier l'unité de commande 22. Les coûts liés à ce changement dans la conception de l'actionneur électromécanique 25 sont donc réduits.

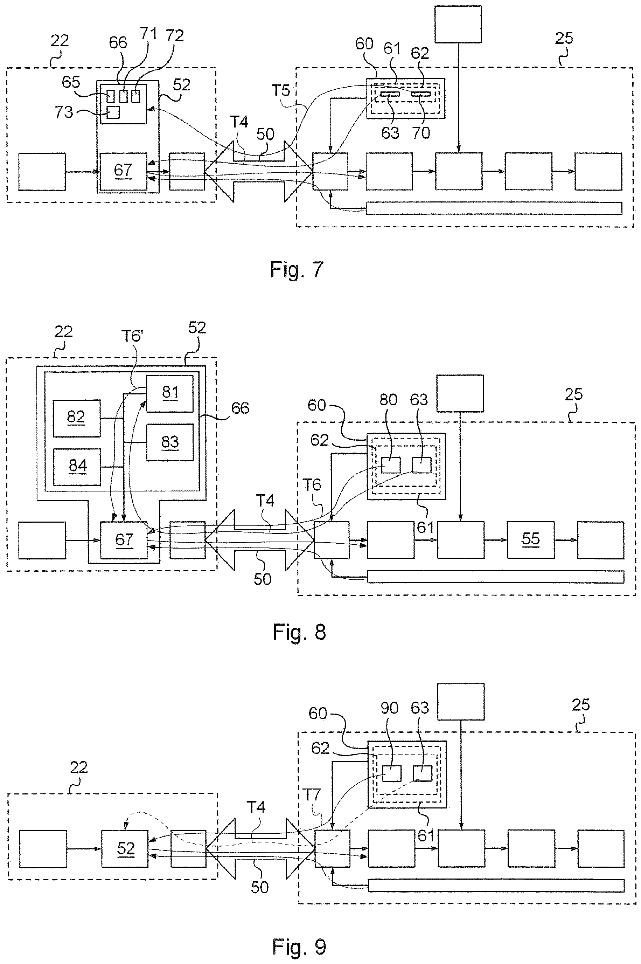

En référence à la figure 7, le système d'actionnement selon un deuxième mode de réalisation de l'invention comprend à nouveau l'unité de commande 22, l'actionneur électromécanique 25 et le canal de transmission numérique 50.

La mémoire non volatile 60 de l'actionneur électromécanique 25 du système selon le deuxième mode de réalisation de l'invention est aussi utilisée pour paramétrer d'autres algorithmes.

Ainsi, les données de configuration 62 des données mémorisées 61 stockées dans la mémoire non volatile 60 comportent, outre les paramètres d'asservissement 63 de l'algorithme d'asservissement 67, des paramètres 70 d'un algorithme de détection de panne 71, d'un algorithme de suivi de tendance 72 et d'un algorithme de comptage de cycles 73.

L'algorithme de détection de panne 71, l'algorithme de suivi de tendance 72 et l'algorithme de comptage de cycle 73 sont stockés dans la mémoire 66 des moyens de traitement 52 de l'unité de commande 22. Lorsque qu'il convient d'exécuter l'un de ces algorithmes 71, 72, 73, l'unité de commande 22 acquiert les paramètres 70 correspondant (transmission T5 sur la figure 7).

En référence à la figure 8, le système d'actionnement selon un troisième mode de réalisation de l'invention comprend à nouveau l'unité de commande 22, l'actionneur électromécanique 25 et le canal de transmission numérique 50.

La mémoire non volatile 60 de l'actionneur électromécanique 25 du système d'actionnement selon le troisième mode de réalisation de l'invention est aussi utilisée pour stocker un identifiant 80 d'un algorithme d'asservissement à utiliser pour l'actionneur électromécanique 25.

Ainsi, les données de configuration 62 des données mémorisées 61 stockées dans la mémoire non volatile 60 comportent un identifiant 80 qui permet aux moyens de traitement 52 de l'unité de commande 22 de sélectionner l'algorithme d'asservissement à utiliser parmi une liste d'algorithmes d'asservissement mémorisés dans la mémoire 66 des moyens de traitement 52.

La liste d'algorithmes d'asservissement comporte un algorithme d'asservissement 81 pour un actionneur électromécanique ayant un moteur à courant alternatif, un algorithme d'asservissement 82 pour un actionneur électromécanique ayant un moteur à courant continu, un algorithme d'asservissement 83 pour un actionneur électromécanique ayant un moteur couple, un algorithme d'asservissement 84 pour un actionneur électromécanique ayant un moteur pas à pas.

Le moteur électrique 55 de l'actionneur électromécanique 25 est ici un moteur à courant alternatif. Ainsi, avant l'utilisation de l'actionneur électromécanique 25, par exemple au moment de la mise sous tension de l'unité de commande 22 et de l'actionneur électromécanique 25, les moyens de traitement 52 de l'unité de commande 22 acquièrent l'identifiant 80 stocké dans la mémoire non volatile 60 de l'actionneur électromécanique 25 (transmissions T6 et T6" sur la figure 8). Les moyens de traitement 52 sélectionnent et exécutent alors l'algorithme d'asservissement 81 pour un actionneur électromécanique ayant un moteur à courant alternatif.

Ainsi, un changement de technologie du moteur électrique 55 de l'actionneur électromécanique 25 qui nécessite d'utiliser un algorithme d'asservissement différent préalablement stocké dans la mémoire 66 des moyens de traitement 52 peut être mis en œuvre uniquement en stockant le nouvel identifiant dans la mémoire non volatile 60 de l'actionneur électromécanique 25 sans modifier l'unité de commande 22.

En référence à la figure 9, le système d'actionnement selon un quatrième mode de réalisation de l'invention comprend à nouveau l'unité de commande 22, un actionneur électromécanique 25 et un canal de transmission numérique 50.

La mémoire non volatile 60 de l'actionneur électromécanique 25 du système selon le quatrième mode de réalisation de l'invention est aussi utilisée pour stocker un code exécutable 90 d'un algorithme d'asservissement déjà paramétré de l'actionneur électromécanique 25.

Ainsi, avant l'utilisation de l'actionneur électromécanique 25, par exemple au moment de la mise sous tension de l'unité de commande 22 et de l'actionneur électromécanique 25, les moyens de traitement 52 de l'unité de commande 22 acquièrent le code exécutable 90 de l'algorithme d'asservissement dans la mémoire non volatile (transmissions T7 sur la figure 9).

La conception de l'unité de commande 22 ne nécessite donc pas une définition préalable de l'algorithme d'asservissement.

On note ici que le code exécutable de tout type d'algorithme peut être stocké dans la mémoire non volatile 60, et pas uniquement le code exécutable d'un algorithme d'asservissement (par exemple, le code exécutable d'un algorithme de détection de panne et/ou d'un algorithme de suivi de tendance et/ou d'un algorithme de comptage de cycles).

Avantageusement, et quel que soit le mode de réalisation du système d'actionnement précédemment décrit, la mémoire non volatile 60 de l'actionneur électromécanique 25 peut être utilisée pour stocker des données de configuration comportant des données de calibration de l'actionneur électromécanique 25. Les données de calibration peuvent être utilisées par l'unité de commande 22 pour corriger un ou des signaux de consigne des boucles d'asservissement ou bien des signaux numériques de mesure. Les données de calibration sont par exemple des données permettant une correction en pente, une correction d'offset, ou bien une correction en fonction de paramètres mesurés par les capteurs de l'actionneur électromécanique 25.

Le stockage des données de calibration dans la mémoire non volatile 60 de l'actionneur électromécanique 25 permet de simplifier la mise au point de l'actionneur électromécanique 25 lors de sa conception et de sa fabrication, et donc de réduire les coûts de conception et de fabrication de l'actionneur électromécanique 25. On améliore par ailleurs les performances du système en calibrant l'actionneur électromécanique 25 à l'aide des données de calibration.

Avantageusement, et quel que soit le mode de réalisation du système d'actionnement précédemment décrit, la mémoire non volatile 60 peut contenir des données fournies par l'unité de commande 22. La mémoire non volatile 60 est dans ce cas accessible en lecture et en écriture par l'unité de commande 22. Les données mémorisées cheminent entre l'actionneur électromécanique 25 et l'unité de commande 22 par le canal de transmission 50, quel que soit le sens de ce cheminement.

Les données fournies par l'unité de commande 22 comportent ici des informations d'usage de l'actionneur électromécanique 25, qui sont produites à partir d'autres données mémorisées dans la mémoire non volatile 60 de l'actionneur électromécanique 25, ou bien qui sont obtenues par l'exécution d'un algorithme quelconque par l'unité de commande 22.

En stockant les informations d'usage qui concernent l'actionneur électromécanique 25 dans sa mémoire non volatile 60, on facilite les opérations de maintenance à venir. Un opérateur de maintenance aura accès aux informations d'usage de l'actionneur électromécanique 25 sans qu'il soit nécessaire de configurer selon une configuration de maintenance particulière l'unité de commande 22 ou l'actionneur électromécanique 25. De même, on facilite les opérations de réparation à venir. Un opérateur de réparation aura accès aux informations d'usage de l'actionneur électromécanique 25 sans qu'il soit nécessaire de transférer des données provenant de l'unité de commande 22.

Avantageusement, et quel que soit le mode de réalisation du système d'actionnement précédemment décrit, la mémoire non volatile 60 peut contenir d'autres information utiles à l'algorithme d'asservissement, à la surveillance, à la maintenance, à la production et à la livraison de l'actionneur électromécanique 25. Parmi ces autres informations, on peut citer par exemple la référence ou le numéro de série de l'actionneur électromécanique 25.

Ces informations peuvent notamment être utilisées lors de la phase d'initialisation de l'actionneur électromécanique 25.

Avantageusement, et quel que soit le mode de réalisation du système d'actionnement précédemment décrit, le stockage des données mémorisées 61 dans la mémoire non volatile 60 est protégé par un outil de contrôle de type contrôle de redondance cyclique qui assure l'intégrité des données mémorisées 61 et la détection d'une corruption de ces données mémorisées.

Avantageusement, et quel que soit le mode de réalisation du système d'actionnement précédemment décrit, le canal de transmission 50 est constitué par un canal rapide et par un canal lent.

Les données numériques qui nécessitent une transmission rapide (de type transmission en temps réel) transitent par le canal rapide. Il s'agit notamment des signaux numériques de commande et des signaux numériques de mesure utilisés dans les boucles d'asservissement.

Les données numériques qui ne nécessitent pas une transmission rapide transitent par le canal lent. Il s'agit notamment des données mémorisées 61 de la mémoire non volatile 60 lors de l'écriture ou de la lecture de ces données mémorisées 61.

Les données mémorisées 61 peuvent par ailleurs être accessibles en lecture et/ou en écriture par un dispositif d'interrogation sans fil utilisant une technologie de type RFID. Cet accès sans fil est particulièrement intéressant pour réaliser des opérations de maintenance sur l'actionneur électromécanique 25.

Avantageusement, le module de communication et/ou le module de puissance sont intégrés dans un même ASIC qui peut être développé pour plusieurs types d'actionneurs électromécaniques, ce qui réduit les coûts dits « non-récurrents » de développement de ces actionneurs électromécaniques.

L'invention n'est pas limitée aux modes de réalisation particuliers qui viennent d'être décrits, mais, bien au contraire, couvre toute variante entrant dans le cadre de l'invention tel que défini par les revendications.

Bien que l'on ait indiqué que le capteur externe est un capteur de couple de freinage situé sur le frein, il est parfaitement possible de prévoir un ou plusieurs capteurs externes différents, par exemple un capteur de température de la pile de disques (typiquement un thermocouple), ou un capteur de pression d'un pneumatique de la roue, ou encore un tachymètre.

Bien que l'on ait décrit le système d'actionnement de l'invention au sein d'une architecture de système de freinage, le système d'actionnement de l'invention peut parfaitement être intégré dans une architecture d'un autre type de système : système de propulsion, système de commandes de vol, système d'atterrisseur, système de commande d'inverseur de poussée, système de commande d'éléments de voilure, etc.

Bien que l'actionneur électromécanique décrit présente une architecture particulière, celle-ci peut bien sûr être différente. L'invention s'applique par exemple à un système d'actionnement comprenant un actionneur électromécanique comprenant deux voies distinctes redondées, chaque voie comportant son propre module de communication, son propre module de puissance, éventuellement son propre moteur et son propre organe d'actionnement. Chaque voie est aussi associée à des données de configuration différentes pour mettre en œuvre des algorithmes d'asservissement différents.

Le canal de transmission numérique ici décrit est relativement complexe, du fait de l'agencement en réseau des actionneurs électromécaniques. L'invention s'applique bien sûr à un système d'actionnement comprenant un canal de transmission numérique différent, tel qu'un simple bus numérique.

## Revendications

1. Système d'actionnement pour aéronef comprenant :
- un actionneur électromécanique (25) qui comporte un moteur électrique (55), un module de puissance (54) destiné à générer un courant d'alimentation du moteur électrique, des moyens de mesure (59) adaptés à mesurer une grandeur d'asservissement de l'actionneur électromécanique et à générer un signal numérique de mesure représentatif de la grandeur d'asservissement, un module de communication (26) et une mémoire non volatile (60) dans laquelle sont stockées des données mémorisées (61) comportant des données de configuration (62) propres à l'actionneur électromécanique, le moteur électrique (55), le module de puissance (54), les moyens de mesure(59), le module de communication (26) et la mémoire non volatile étant intégrés dans l'actionneur électromécanique (25) ;
- une unité de commande (22) séparée de l'actionneur électromécanique (25) et destinée à exécuter un algorithme d'asservissement (67) en acquérant et en utilisant les données de configurations pour adapter l'algorithme d'asservissement (67) à l'actionneur électromécanique (25), l'algorithme d'asservissement (67) mettant en œuvre une boucle d'asservissement ayant pour signal de retour le signal numérique de mesure et pour signal de sortie un signal numérique de commande du moteur électrique (55) à destination du module de puissance (54) ;
- au moins un canal de transmission numérique (50) reliant l'unité de commande (22) et l'actionneur électromécanique (26) et permettant le cheminement entre l'unité de commande (22) et l'actionneur électromécanique (26) du signal numérique de mesure, des données mémorisées et du signal numérique de commande.

2. Système selon la revendication 1, dans lequel les données de configuration comportent des paramètres (63) de l'algorithme d'asservissement.

3. Système selon la revendication 2, dans lequel les paramètres (63) comprennent un coefficient proportionnel et/ou un coefficient intégral et/ou un coefficient dérivé de la boucle d'asservissement, et/ou une limitation en position et/ou une limitation en vitesse et/ou une limitation en courant de l'actionneur électromécanique.

4. Système selon la revendication 1, dans lequel les données de configuration (62) comportent des paramètres d'un autre algorithme.

5. Système selon la revendication 4, dans lequel l'autre algorithme comprend un algorithme de détection de panne et/ou un algorithme de suivi de tendance et/ou un algorithme de comptage de cycles.

6. Système selon la revendication 1, dans lequel les données de configuration (62) comportent un identifiant (80) permettant à l'unité de commande de sélectionner l'algorithme d'asservissement à utiliser parmi une liste d'algorithmes d'asservissement mémorisés dans l'unité de commande.

7. Système selon la revendication 1, dans lequel les données de configuration comportent un code exécutable de l'algorithme d'asservissement.

8. Système selon la revendication 1, dans lequel les données de configuration comportent des données de calibration de l'actionneur électromécanique.

9. Système selon la revendication 8, dans lequel les données de calibration comportent un code exécutable d'un algorithme de calibration.

10. Système selon la revendication 9, dans lequel l'algorithme de calibration est une correction en pente et/ou une correction en offset et/ou une correction en fonction d'un paramètre mesuré dans l'actionneur électromécanique tel que la température.

11. Système selon la revendication 1, dans lequel les données mémorisées comportent en outre des données transmises par l'unité de commande.

12. Système selon la revendication 11, dans lequel les données transmises par l'unité de commande comportent des informations d'usage de l'actionneur électromécanique.

13. Système selon la revendication 1, dans lequel les données mémorisées sont protégées par un outil de contrôle de type contrôle de redondance cyclique.

14. Système selon la revendication 1, dans lequel l'actionneur électromécanique comporte deux voies redondées auxquelles sont associées des données de configuration différentes pour mettre en œuvre des algorithmes d'asservissement différents.

15. Système selon la revendication 1, dans lequel deux canaux de transmission numérique relient l'unité de commande et l'actionneur électromécanique.

16. Système selon la revendication 15, dans lequel les deux canaux de transmission numérique comportent un canal rapide pour échanger le signal numérique de mesure et le signal numérique de commande, et un canal lent pour transmettre les données mémorisées

17. Système selon la revendication 1, dans lequel certaines des données mémorisées sont accessibles en lecture et/ou en écriture par un dispositif d'interrogation sans fil utilisant une technologie de type RFID.

## Patentansprüche

1. Betätigungssystem für ein Luftfahrzeug, umfassend:
- einen elektromechanischen Aktor (25), der einen Elektromotor (25), ein Leistungsmodul (54), das dazu bestimmt ist, einen Strom zur Versorgung des Elektromotors zu erzeugen, Messmittel (59), die dazu geeignet sind, eine Servoregelgröße des elektromechanischen Aktors zu messen und ein digitales Messsignal zu erzeugen, das repräsentativ für die Servoregelgröße ist, ein Kommunikationsmodul (26) und einen nichtflüchtigen Speicher (60) umfasst, in dem gespeicherte Daten (61) gespeichert sind, die Konfigurationsdaten (62) umfassen, die für den elektromechanischen Aktor spezifisch sind, wobei der Elektromotor (55), das Leistungsmodul (54), die Messmittel (59), das Kommunikationsmodul (26) und der nichtflüchtige Speicher in den elektromechanischen Aktor (25) integriert sind;
- eine Steuereinheit (22), die von dem elektromechanischen Aktor (25) getrennt und dazu bestimmt ist, einen Servoregelalgorithmus (67) auszuführen, indem die Konfigurationsdaten erfasst und verwendet werden, um den Servoregelalgorithmus (67) an den elektromechanischen Aktor (25) anzupassen, wobei der Servoregelalgorithmus (67) eine Servoregelschleife implementiert, die als Rückführungssignal das digitale Messsignal und als Ausgangssignal ein digitales Steuersignal zum Steuern des Elektromotors (55) mit Ziel Leistungsmodul (54) hat;
- mindestens einen digitalen Übertragungskanal (50), der die Steuereinheit (22) und den elektromechanischen Aktor (26) verbindet und den Fluss des digitalen Messsignals, der gespeicherten Daten und des digitalen Steuersignals zwischen der Steuereinheit (22) und dem elektromechanischen Aktor (26) ermöglicht.

2. System nach Anspruch 1, bei dem die Konfigurationsdaten Parameter (63) des Servoregelalgorithmus umfassen.

3. System nach Anspruch 2, bei dem die Parameter (63) einen proportionalen Koeffizienten und/oder einen integralen Koeffizienten und/oder einen abgeleiteten Koeffizienten der Servoregelschleife und/oder eine Positionsbeschränkung und/oder eine Geschwindigkeitsbeschränkung und/oder eine Strombegrenzung des elektromechanischen Aktors umfassen,

4. System nach Anspruch 1, bei dem die Konfigurationsdaten (62) Parameter eines anderen Algorithmus umfassen.

5. System nach Anspruch 4, bei dem der andere Algorithmus einen Fehlererkennungs-Algorithmus und/oder einen Trendfolge-Algorithmus und/oder einen Zykluszähl-Algorithmus umfasst.

6. System nach Anspruch 1, bei dem die Konfigurationsdaten (62) eine Kennung (80) umfassen, die der Steuereinheit ermöglicht, den zu verwendenden Servoregelalgorithmus aus einer Liste von in der Steuereinheit gespeicherten Servoregelalgorithmen auszuwählen.

7. System nach Anspruch 1, bei dem die Konfigurationsdaten einen von dem Servoregelalgorithmus ausführbaren Code umfassen.

8. System nach Anspruch 1, bei dem die Konfigurationsdaten Kalibrierdaten des elektromechanischen Aktors umfassen.

9. System nach Anspruch 8, bei dem die Kalibrierdaten einen Code umfassen, der von einem Kalibrieralgorithmus ausführbar ist.

10. System nach Anspruch 9, bei dem der Kalibrieralgorithmus eine Steigungskorrektur und/oder eine Offsetkorrektur und/oder eine Korrektur in Abhängigkeit eines in dem elektromechanischen Aktor gemessenen Parameters, wie z. B. der Temperatur, ist.

11. System nach Anspruch 1, bei dem die gespeicherten Daten ferner von der Steuereinheit übertragene Daten umfassen.

12. System nach Anspruch 11, bei dem die von der Steuereinheit übertragenen Daten Informationen zur Nutzung des elektromechanischen Aktors umfassen.

13. System nach Anspruch 1, bei dem die gespeicherten Daten durch ein Kontrollwerkzeug vom Typ zyklische Redundanzprüfung geschützt werden.

14. System nach Anspruch 1, bei dem der elektromechanische Aktor zwei redundante Kanäle umfasst, mit denen unterschiedliche Konfigurationsdaten verbunden sind, um unterschiedliche Servoregelalgorithmen zu implementieren.

15. System nach Anspruch 1, bei dem zwei digitale Übertragungskanäle die Steuereinheit und den elektromechanischen Aktor verbinden.

16. System nach Anspruch 15, bei dem die beiden digitalen Übertragungskanäle einen schnellen Kanal zum Austausch des digitalen Messsignals und des digitalen Steuersignals und einen langsamen Kanal zum Übertragen der gespeicherten Daten umfassen.

17. System nach Anspruch 1, bei dem einige der gespeicherten Daten durch eine drahtlose Abfragevorrichtung, die eine RFID-Technologie verwendet, lesezugänglich und/oder schreibzugänglich sind.

## Claims

1. Actuating system for an aircraft comprising:
- an electromechanical actuator (25) comprising an electric motor (55), a power module (54) intended to generate a current supplied to the electric motor, measuring means (59) adapted for measuring a servo-control magnitude of the electromechanical actuator and for generating a digital measurement signal representative of the servo-control magnitude, a communication module (26) and a non-volatile memory (60) wherein stored data (61) including configuration data (62) specific to the electromechanical actuator is stored;
the electric motor (55), the power module (54), the measuring means (59), the communication module (26) and the non-volatile memory being integrated into the electromechanical actuator (25);
- a control unit (22) separated from the electromechanical actuator (25) and intended to execute a servo-control algorithm (67) by acquiring and using configuration data to adapt the servo-control algorithm (67) to the electromechanical actuator (25), with the servo-control algorithm (67) implementing a servo-control loop the feedback signal of which is the digital measurement signal and the output signal of which is a digital signal controlling the electric motor (55) intended to the power module (54);
- at least one digital transmission channel (50) connecting the control unit (22) and the electromechanical actuator (26) and enabling the routing of the digital measurement signal, the stored data and the digital control signal between the control unit (22) and the electromechanical actuator (26).

2. A system according to claim 1, wherein the configuration data comprises parameters (63) of the servo-control algorithm.

3. A system according to claim 2, wherein the parameters (63) comprise a proportional coefficient and/or an integral coefficient and/or a derived coefficient of the servo-control loop, and/or a position limitation and/or a speed limitation and/or a power limitation of the electromechanical actuator.

4. A system according to claim 1, wherein the configuration data (62) comprises parameters (63) of another algorithm.

5. A system according to claim 4, wherein the other algorithm comprises a failure detection algorithm and/or a trend following algorithm and/or a cycle counting algorithm.

6. A system according to claim 1, wherein the configuration data (62) comprises an identifier (80) enabling the control unit to select the servo-control algorithm to be used among a list of servo-control algorithms stored in the control unit.

7. A system according to claim 1, wherein the configuration data comprises a native code of the servo-control algorithm.

8. A system according to claim 1, wherein the configuration data comprises electromechanical actuator calibration data.

9. A system according to claim 8, wherein the calibration data comprises a native code of a calibration algorithm.

10. A system according to claim 9, wherein the calibration algorithm is a gradient correction and/or an offset correction and/or a correction according to a parameter measured in the electromechanical actuator, such as temperature.

11. A system according to claim 1, wherein the stored data further comprises data transmitted by the control unit.

12. A system according to claim 11, wherein the data transmitted by the control unit comprises information on the utilization of the electromechanical actuator.

13. A system according to claim 1, wherein the stored data is protected by a checking tool of the cyclic redundancy check type.

14. A system according to claim 1, wherein the electromechanical actuator comprises two redundant channels which different configuration data is associated with, in order to implement different servo-control algorithms.

15. A system according to claim 1, wherein two digital transmission channels connect the control unit and the electromechanical actuator.

16. A system according to claim 15, wherein both digital transmission channels comprise a fast channel for exchanging the digital measurement signal and the digital control signal, and a slow channel for transmitting the stored data.

17. A system according to claim 1, wherein some of the stored data is read-accessible and/or write-accessible by a wireless interrogation device using RIFD-type technology.
